Europäisches Patentamt

European Patent Office

Office européen des brevets

(19)

(11) **EP 0 751 471 A1**

(12) **EUROPEAN PATENT APPLICATION**

(43) Date of publication:
**02.01.1997 Bulletin 1997/01**

(51) Int Cl.[6]: **G06F 17/60**

(21) Application number: **96304536.4**

(22) Date of filing: **18.06.1996**

(84) Designated Contracting States:
**AT BE CH DE DK ES FI FR GB GR IE IT LI LU MC NL PT SE**

(30) Priority: **30.06.1995 US 598**
**11.12.1995 US 8458**
**02.02.1996 US 597442**

(71) Applicant: **MASSACHUSETTS INSTITUTE OF TECHNOLOGY**
**Cambridge, MA 02139 (US)**

(72) Inventors:
• **Lashkari, Yezdezard Z.**
**Cambridge, Massachusetts 02140 (US)**

• **Maes, Patricia**
**Cambridge, Massachusetts 02139 (US)**
• **Metral, Max E.**
**Boston, Massachusetts 02215 (US)**
• **Shardanand, Upendra**
**Cambridge, Massachusetts 02139 (US)**

(74) Representative: **Butler, Michael John**
**Frank B. Dehn & Co.,**
**European Patent Attorneys,**
**179 Queen Victoria Street**
**London EC4V 4EL (GB)**

(54) **Method and apparatus for item recommendation using automated collaborative filtering**

(57) A method for recommending items to users using automated collaborative filtering stores profiles of users relating ratings to items in memory. Profiles of items are also stored in memory, the item profiles associating users with the rating given to the item by that user. Similarity factors with respect to other users are calculated for a user, and these similarity factors are used to select a set of neighboring users. The neighboring users are weighted based on their respective similarity factors, and a rating for an item contained in the domain is predicted. In one embodiment, items in the domain have features. In this embodiment, the values for features can be clustered, and the similarity factors incorporate assigned feature weights and feature value cluster weights.

FIG. 1

## Description

The present invention relates to a method and apparatus for recommending items and, in particular, to a method and apparatus for recommending items using automated collaborative filtering and feature-guided automated collaborative filtering.

The amount of information, as well as the number of goods and services, available to individuals is increasing exponentially. This increase in items and information is occurring across all domains, e.g. sound recordings, restaurants, movies, World Wide Web pages, clothing stores, etc. An individual attempting to find useful information, or forced to decide between competing goods and services, is often faced with a bewildering selection of sources and choices.

Individual sampling of all items, even in a particular domain, may be impossible. For example, sampling every restaurant of a particular type in New York City would tax even the most avid diner. Such a sampling would most likely be prohibitively expensive to carry out, and the diner would have to suffer through many unenjoyable restaurants.

In many domains, individuals have simply learned to manage information overload by relying on a form of generic referral system. For example, in the domain of movie and sound recordings, many individuals rely on reviews written by paid reviewers. These reviews, however, are simply the viewpoint of one, or perhaps two, individuals and may not have a likelihood of correlating with how the individual will actually perceive the movie or sound recording. Many individuals may rely on a review only to be disappointed when they actually sample the item.

One method of attempting to provide an efficient filtering mechanism is to use content-based filtering. The content-based filter selects items from a domain for the user to sample based upon correlations between the content of the item and the user's preferences. Content-based filtering schemes suffer from the drawback that the items to be selected must be of some machine-readable form, or attributes describing the content of the item must be entered by hand. This makes content based filtering problematic for existing items such as sound recordings, photographs, art, video, and any other physical item that is not inherently machine-readable. While item attributes can be assigned by hand in order to allow a content-based search, for many domains of items such assignment is not practical. For example, it could take decades to enter even the most rudimentary attributes for all available network television video clips by hand.

Perhaps more importantly, even the best content-based filtering schemes cannot provide an analysis of the quality of a particular item as it would be perceived by a particular user, since quality is inherently subjective. So, while a content-based filtering scheme may select a number of items based on the content of those items, a content-based filtering scheme generally cannot further refine the list of selected items to recommend items that the individual will enjoy.

The present invention, in one aspect, relates to a method for recommending an item to a user which the user has not yet rated. A profile for each user is stored in a memory, and each user profile includes ratings given to items by the user. A profile for each item is stored in a memory, and each item profile includes ratings given to the item by the users.

A set of similarity factors are calculated for each user; each similarity factor represents the degree of agreement between two users' opinions for all items. Using these similarity factors, a set of neighboring users is selected for each user. The neighboring users are assigned a weight. Using the weights and the ratings given to items by the neighboring users, a recommendation for an item not yet rated by a user is made.

In some embodiments, the calculating step comprises receiving a rating from one of the users for one of the items. Both the rating user's profile and the rated item's profile are updated with the received rating, and a new set of similarity factors are calculated for the rating user. In other embodiments, ratings for items are received via a local area network or a wide area network.

In one embodiment, once a rating for an item is received from a user, the rated item's profile is retrieved to determine other users that have also rated the item. A new plurality of similarity factors is calculated for the rating user only with respect to the users that have also rated the item.

In certain embodiments, the similarity factors for a particular user are calculated by retrieving an item profile, determining other users that have also rated the item, and calculating a similarity factor between the particular user and each of the other users that have also rated the item. These steps are repeated until all items rated by the particular user have been retrieved and all similarity factors for the user have been calculated. These steps, in turn, are repeated until similarity factors for all users have been calculated.

In one embodiment, the similarity factors are calculated by subtracting the rating given to the item by each of the other users from the rating given to the item by the requesting user, squaring each rating difference, and dividing the sum of the squared differences by the number of other users that have also rated the item.

In another embodiment, the similarity factors may be a Pearson r correlation coefficient between users. In this embodiment, the similarity factor between user x and user y is then given by dividing the sum of the products of the mean score given to items by user x subtracted from the rating given to each item by user x and the mean score given to items by user y subtracted from the rating given to each item by user y by the square root of the product of two sums. The first sum is the squared differences between the rating given by user x to each item and the mean score given to all items by user x. The second sum is the squared differences between the rating given by user y to each item and the mean score given by user y to all items.

In other embodiments, users are selected as neighboring users when the similarity factor between two users is less than a predetermined threshold value. In still other embodiments, a weight is assigned to neighboring users by subtracting, for each neighboring user, the similarity factor for that neighboring user from the predetermined threshold value and dividing each difference by the predetermined threshold value.

In some other embodiments, an item is recommended by predicting a rating for each item not yet rated by a user. The predicted rating is arrived at by taking a weighted average of the ratings given to the items by the user's neighboring users. Items are then recommended to the user based on the predicted ratings.

In one embodiment, the user selects an item and a rating is predicted by taking a weighted average of the ratings given to the selected item by the user's neighboring users.

In certain embodiments, information about the recommended items can be provided on a display.

In another aspect, the present invention relates to a method for recommending an item to a user which has not yet been rated by the user, each item belonging to at least one group of items. A set of similarity factors for each user is calculated, representing the degree of agreement in item ratings between users within different groups. Neighboring users are selected within each group, a weight is assigned to each of the neighboring users for each group, and items are recommended based on the weights assigned to the user's neighboring users and the ratings given to the unrated item by the user's neighboring users.

In some embodiments, the similarity factors are calculated by retrieving the item profile for an item that has been rated by a user, determining other users that have also rated the item, calculating a similarity factor between the user and the other users that have also rated the item, and repeating these steps until all items rated by the user in a group have been retrieved. These steps, in turn, are repeated until similarity factors for each user have been calculated.

In one embodiment, the similarity factors are calculated only using ratings for other items belonging to the same group.

In other embodiments, each selected neighboring user has a similarity factor less than a predetermined threshold value and neighboring users are assigned weights by subtracting, for each neighboring user, the similarity factor for that neighboring user from a predetermined threshold value and dividing each difference by the predetermined threshold value.

In still other embodiments, a rating is predicted for an item in a group not yet rated by a user by taking a weighted average of the ratings given to the items in the group by the user's neighboring users, and recommending a predetermined number of items from the group based on the predicted ratings for those items.

An item may be selected by the user, in which case a rating is predicted for the selected item by taking a weighted average of the ratings given to the selected item by the user's neighboring users within the group. The user may also select a particular group for which to receive recommendations, in which case, a rating is predicted for items in the selected group by taking a weighted average of the ratings given to the items in the group by the user's neighboring users for that group. A predetermined number of items are recommended based on their predicted rating.

In certain embodiments, items belong to more than one group. In other certain embodiments, information about recommended items is provided on a display.

In another aspect, the present invention relates to a method for recommending other users to a user. User profiles are stored in a memory for each user, and each user profile includes ratings given to items by the user. Item profiles are also stored in a memory for each of the items, and each of the items belongs to one of a plurality of groups. Each item profile includes a plurality of ratings given to the item by one of the users.

Similarity factors are calculated for each user, each similarity factor representing the rating similarity between each user and another one of the users for a particular group. Neighboring users are recommended to a user based on the similarity factors.

In a certain embodiment, a neighboring user is recommended based on the similarity factors and the number of items rated by both users.

In another aspect, the present invention relates to a method for recommending an item, the item having at least one feature defining a characteristic of the item and having more than one possible value. The possible values may be grouped into clusters of feature values. User profiles are stored in a memory for each user, and the user profiles include ratings given to items by each user. Item profiles are also stored in a memory for each of the items, and the item profiles include ratings given to each item by the users.

A weight is assigned to each cluster of feature values for each user. A weight is also assigned to each feature for each user. Using the feature weights, the feature value cluster weights, and the ratings given to items by the users, a set of similarity factors is calculated for each user. For each user, a set of neighboring users is selected responsive to the similarity factors; a weight is assigned to each of the neighboring users, and items are recommended to a user based on the weights assigned to the user's neighboring users and the ratings given to the unrated item by the user's neighboring users.

In some embodiments a weight is assigned, for each user, to each value cluster based on the rating given to the item by the user and the number of feature value clusters present.

In other embodiments, a weight is assigned, for each user, to each feature. This can be done based on the number of features defined for the item, or a feature weight may be assigned by based on the weights assigned to each feature value cluster. In particular, the feature weights can be assigned by dividing the standard deviation of the cluster weights by the mean of the cluster weights.

In still other embodiments, a similarity factor is calculated for each feature value with respect to all other feature values, and the feature values are grouped based on the feature value similarity factors.

In another aspect, the present invention relates to a method for recommending an item to a user, the item having at least one feature defining a characteristic of the item and having a plurality of possible values that may be grouped into clusters of feature values. User profiles are stored in a memory for each user, and the user profile includes ratings given to items by the user. Item profiles are stored in a memory for each items, and the item profile includes ratings given to the item by the users.

A weight is assigned to each feature value cluster for each user. A weight is assigned to each feature for each user. Using the feature weights and the feature value cluster weights, similarity factors between items are calculated for a particular user. An item for which a favorable rating has been received from the user is selected, and a number of items are recommended to the users responsive to the item similarity factors.

In another aspect, the present invention relates to an article of manufacture having program means for recommending an item embodied thereon. The article includes computer-readable program means for storing a user profile in a memory; the user profile includes ratings given to the items by the user. The article also includes computer-readable program means for storing an item profile in a memory; the item profile includes ratings given to the item by the users.

Also included are computer-readable program means for calculating similarity factors for each user, each of the similarity factors representing the similarity between each user and another one of the users, and computer-readable program means for selecting neighboring users for each user responsive to the similarity factors.

The article also includes computer-readable program means for assigning a weight to each of the neighboring users, as well as computer-readable program means for recommending an item to one of the users based on the weights assigned to the user's neighboring users and the ratings given to the unrated item by the user's neighboring users.

In yet another aspect, the present invention relates to an article of manufacture including computer-readable program means for predicting a rating for an item, the item having at least one feature defining a characteristic of the item and having a plurality of possible values that may be grouped into clusters of feature values.

Also included on the article are: computer-readable program means for storing a user profile in a memory for each user, each user profile including ratings given to the of items by the user; computer-readable program means for storing an item profile in a memory for each item, each item profile including ratings given to the item by the users; computer-readable program means for assigning, for each user, a weight to each value cluster within each feature; computer-readable program means for assigning, for each user, a weight to each feature; computer-readable program means for calculating a set of similarity factors for each user, each similarity factor based on the feature weights, the cluster weights, and the ratings given to items by the respective users; computer-readable program means for selecting, for each user, a set of neighboring users responsive to the similarity factors; computer-readable program means for assigning a weight to each of the neighboring users; and computer-readable program means for recommending an item to one of the users based on the weights assigned to the user's neighboring users and the ratings given to the unrated item by the user's neighboring users.

In another aspect, the present invention relates to an apparatus for recommending an item to a user which has not yet rated the item. The apparatus has a memory element for storing user profiles; each user profile includes ratings given to items by the user. A memory element for storing item profiles is also included; each item profile includes ratings given to the item by the users.

The apparatus also includes means for calculating similarity factors for each user, each of the similarity factors representing the similarity between each user and another one of the users, and means for selecting, for each of the users, a set of neighboring users responsive to the similarity factors.

The apparatus also has means for assigning a weight to each of the neighboring users; and means for recommending at least one of the items to one of the users based on the weights assigned to the user's neighboring users and the ratings given to the unrated item by the user's neighboring users.

In yet another aspect, the present invention relates to an apparatus for recommending an item to a user, the item having at least one feature defining a characteristic of the item and having many possible feature values that may be grouped. The apparatus includes a memory element for storing user profiles; each user profile includes ratings given to the items by the user. A memory element for storing item profiles is also included; each item profile includes ratings given to the item by the users. Means for assigning a weight to each value cluster within each feature is also provided.

The apparatus also includes: means for assigning, for each user, a weight to each feature; means for calculating similarity factors for each user, each of the similarity factors based on the feature weights, the cluster weights, and the ratings given to items by the respective users; means for selecting, for each of the users, a plurality of neighboring users responsive to the similarity factors; means for assigning a weight to each of the neighboring users; and means for recommending an item to one of the users based on the weights assigned to the user's neighboring users and the ratings given to the unrated item by the user's neighboring users.

Certain embodiments of the invention will now be described by way of example and with reference to the accompanying drawings, in which:

FIG. 1 is a flowchart of one embodiment of the method of the present invention;
FIG. 2 is a flowchart of one embodiment of the method of the present invention;
FIG. 3 is a block diagram of an embodiment of the apparatus of the present invention; and
FIG. 4 is a block diagram of the Internet system on which the preferred methods and apparatus may be used.

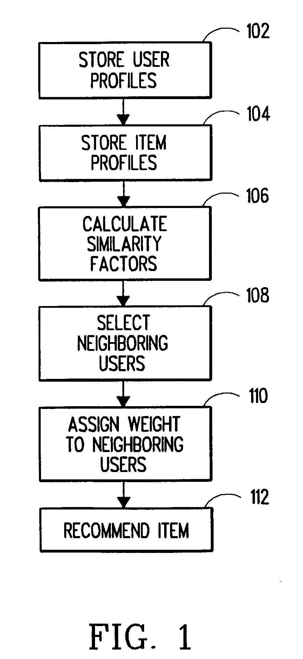

As referred to in this description, items to be recommended can be items of any type that a user may sample, such as sound recordings, movies, restaurants, vacation destinations, novels, or World Wide Web pages. When reference is made to a "domain," it is intended to refer to any category or subcategory of ratable items, such as sound recordings, movies, or restaurants in a particular city. Referring now to FIG. 1, a method for recommending items begins by storing user and item information in profiles.

A plurality of user profiles is stored in a memory element (step 102). It is preferred that one profile is created for each user, however, multiple profiles may be created for a user to represent that user over multiple domains. The memory element can be any memory element known in the art that is capable of storing sufficient data for the plurality of profiles and allowing the profiles to be updated, such as disc drive or random access memory.

Each user profile associates ratings given to an item by the user with a particular item. User profiles can be any data construct that facilitates this association, such as an array, although it is preferred to provide user profiles as sparse vectors of ordered pairs. Each ordered pair contains a number representing the rated item and a number representing the rating that the user gave to the item.

In the preferred embodiment, a profile for a user is created when that user first begins rating items, although in multi-domain applications user profiles may be created for particular domains only when the user begins to explore, and rate items within, those domains. Whenever a user profile is created, a number of ratings for items are solicited from the user. This can be done by providing the user with a particular set of items to rate corresponding to a particular group of items. Groups are genres of items and are discussed below in more detail. Other methods of soliciting ratings from the user include: manual entry of item-rating pairs, in which the user simply submits a list of items and ratings assigned to those items; soliciting ratings by date of entry into the system, i.e., asking the user to rate the newest items added to the system; soliciting ratings of the most rated items; or by allowing a user to rate items similar to an initial item selected by the user. The preferred embodiment uses all of the methods described above and allows the user to select the particular method they wish to employ.

Profiles are stored for each item that has been rated by at least one user (step 104). Each item profile records how particular users have rated this particular item. Any data construct that associates ratings with certain users can be used. It is preferred is to provide item profiles as a sparse vector of ordered pairs. Each ordered pair contains a number representing a particular user and a number representing the rating that user gave to the item. Item profiles are created when the first rating is given to an item. Although FIG. 1 shows item profiles being stored after user profiles, the two may be stored in any order, and can occur simultaneously.

A similarity factor for each user is calculated with respect to all other users (step 106), and represents the degree of similarity between any two users with respect to all items. It is currently preferred that the more similar two users are, the closer the similarity factor is to zero. Specialized hardware may be provided for calculating the similarity factors between users, although it is preferred to provide a general-purpose computer with appropriate programming to calculate the similarity factors.

The similarity factor may be calculated by comparing a user's profile with the profile of every other user. This is computationally intensive, however, and it is preferred to calculate the similarity factor by first examining the profiles of each item for which a user has entered a rating and determining which other users have also rated each item. The similarity factors between the user and the other users that have also rated the items are the only similarity factors updated. These steps are repeated for all users.

Ratings for items are received from users. Item ratings can be of any form that allows users to record subjective impressions of items based on their experience of the item. For example, items may be rated on an alphabetic scale ("A" to "F") or a numerical scale (1 to 10). It is currently preferred that ratings are integers between 1 (lowest) and 7 (highest). Ratings can be received as input to a stand-alone machine, as input to a system via electronic mail, or as input to a system via a local area or wide area network. In the currently preferred embodiment, ratings are received as input to a World Wide Web page. Ratings can be received from users singularly or in batches, and may be received from any number of users simultaneously.

Whenever a rating is received from a user, the profile of the user who entered the rating must be updated as well as the profile of the item rated by the user. Profile updates may be stored in a temporary memory location and entered at a convenient time. It is preferred, however, to update profiles whenever a new rating is entered by a user. Ratings are updated by appending a new pair of values to the set of already existing ordered pairs in the profile.

Whenever a user's profile is updated because a rating has been received from the user, new similarity factors between the user and all other users of this system must be calculated. This can be done by comparing the ratings given to items by the user to the ratings given to items by all other users. However, it is currently preferred to reduce the amount of computation necessary in the following manner. Whenever a user enters a rating for an item, that item's profile is retrieved and the identity of other users that have also rated the item is determined. In this way, only the similarity factors between the rating user and other users that have also rated the item are updated.

Any number of methods can be used to calculate the similarity factors. In general, a method for calculating similarity factors between users should minimize the average error between a predicted rating for an item and the rating a user would actually have given the item.

It is also desirable to reduce error in cases involving "extreme" ratings. That is, a method which predicts fairly well for item ratings representing ambivalence towards an item but which does poorly for item ratings representing extreme enjoyment or extreme disappointment with an item is not useful for recommending items to users.

Similarity factors between users refers to any quantity which expresses the degree of correlation between two user's profiles. The following methods for calculating the similarity factor are intended to be exemplary, and in no way exhaustive. Depending on the item domain, different methods will produce optimal results, since users in different domains will tolerate different expected errors.

In the following description of methods, $D_{xy}$ represents the similarity factor calculated between two users, x and y. $H_{ix}$ represents the rating given to item i by user x, I represents all items in the database, and $c_{ix}$ is a Boolean quantity which is 1 if user x has rated item i and 0 if user x has not rated that item.

One method of calculating the similarity between a pair of users is to calculate the average squared difference between their ratings for mutually rated items. Thus, the similarity factor between user x and user y is calculated by subtracting, for each item rated by both users, the rating given to an item by user y from the rating given to that same item by user x and squaring the difference. The squared differences are summed and divided by the total number of items rated. This method is represented mathematically by the following expression:

$$D_{xy} = \frac{\sum_{i \in I} c_{ix} c_{iy} (H_{ix} - H_{iy})^2}{\sum_{i \in I} c_{ix} c_{iy}}$$

A similar method of calculating the similarity factor between a pair of users is to divide the sum of their squared rating differences by the number of items rated raised to a power greater than 1. This method is represented by the following mathematical expression:

$$D_{xy} = \frac{\sum_{i \in Cxy} (H_{ix} - H_{iy})^2}{|C_{xy}|^k}$$

where $|C_{xy}|$ represents the number of items rated by both users and k is greater than 1.

A third method for calculating the similarity factor between users attempts to factor into the calculation the amount of overlap between two user profiles. Thus, for each item rated by both users, the rating given to an item by user y is subtracted from the rating given to that same item by user x. These differences are squared and then summed. The amount of profile overlap is taken into account by dividing the sum of squared rating differences by a quantity equal to the number of items mutually rated by the users subtracted from the sum of the number of items rated by user x and the number of items rated by users y. This method is expressed mathematically by:

$$D_{xy} = \frac{\sum_{i \in C_{xy}} (H_{ix} - H_{iy})^2}{\sum_{i \in I} c_{ix} + \sum_{i \in I} c_{iy} - |C_{xy}|}$$

where $|C_{xy}|$ represents the number of items mutually rated by users x and y.

In another embodiment, the similarity factor between two users is a Pearson r correlation coefficient. Alternatively, the similarity factor may be calculated by constraining the correlation coefficient with a predetermined average rating value, A. Using the constrained method, the correlation coefficient, which represents $D_{xy}$, is arrived at in the following manner. For each item rated by both users, A is subtracted from the rating given to the item by user x and the rating given to that same item by user y. Those differences are then multiplied. The summed product of rating differences is divided by the product of two sums. The first sum is the sum of the squared differences of the predefined average rating value, A, and the rating given to each item by user x. The second sum is the sum of the squared differences of the predefined average value, A, and the rating given to each item by user y. This method is expressed mathematically by:

$$D_{xy} = \frac{\sum_{i \in C_{xy}} (H_{ix} - A)(H_{iy} - A)}{\sum_{i \in U_x} (H_{ix} - A)^2 \sum_{i \in U_y} (H_{iy} - A)^2}$$

where $U_x$ represents all items rated by x, $U_y$ represents all items rated by y, and $C_{xy}$ represents all items rated by both x and y.

Regardless of the method used to generate them, the similarity factors are used to select a plurality of users that have a high degree of correlation to a user (step 108). These users are called the user's "neighboring users." The neighboring users are selected from all other users based on having a similarity factor with respect to the requesting user less than a predetermined threshold value, L. The threshold value, L, can be set to any value which improves the predictive capability of the method. In general, the value of L will change depending on the method used to calculate the similarity factors, the item domain, and the size of the number of ratings that have been entered.

A weight is assigned to each of the neighboring users (step 110). In the preferred embodiment, the weights are assigned by subtracting the similarity factor calculated for each neighboring user from the threshold value and dividing by the threshold value. This provides a user weight that is higher, i.e. closer to one, when the similarity factor between two users is smaller. Thus, similar users are weighted more heavily than other, less similar, users.

Once weights are assigned to the neighboring users, an item is recommended to a user (step 112). For applications in which positive item recommendations are desired, items are recommended if the user's neighboring users have also rated the item highly. For an application desiring to warn users away from items, items are displayed as recommended against when the user's neighboring users have also given poor ratings to the item. Once again, although specialized hardware may be provided to select neighboring users and weight them, it is currently preferred to provide an appropriately programmed general-purpose computer to provide these functions.

The item to be recommended may be selected in any fashion, so long as the ratings of the neighboring users and their assigned weights are taken into account. In one embodiment, a rating is predicted for each item that has not yet been rated by the user. This predicted rating is arrived at by taking a weighted average of the ratings given to those items by the user's neighboring users. A predetermined number of items are then recommended to the user based on the predicted ratings.

The predetermined number of items can be selected such that those items having the highest predicted rating are recommended to the user. Alternatively, the predetermined number of items may be selected based on having the lowest predicted rating of all the items.

In another embodiment the user selects an item for which a predicted rating is desired. A rating is predicted by taking a weighted average of the ratings given to that item by the user's neighboring users.

Whatever method is used, information about the recommended items can be displayed to the user. For example, in a music domain, the system may display a list of recommending albums including the name of the recording artist, the name of the album, the record label which made the album, the producer of the album, "hit" songs on the album, and other information. In the embodiment in which the user selects an item and a rating is predicted for that item, the system may display the actual rating predicted, or a label representing the predicted rating. For example, instead of displaying 6.8 for the predicted rating, a system may instead display "highly recommended".

In one embodiment, items are grouped in order to help predict ratings and increase recommendation certainty. For example, in the broad domain of music, recordings may be grouped according to various genres, such as "opera," "pop," "rock," and others. Groups are used to improve performance because predictions and recommendations for a particular item are made based only on the ratings given to other items within the same group. Groups may be determined based on information entered by the users, however it is currently preferred to generate the groups using the item data itself.

Generating the groups using the item data itself can be done in any manner which groups items together based on some differentiating feature. For example, in the item domain of music recordings, groups could be generated corresponding to "pop," "opera," and others.

In the preferred embodiment, item groups are generated by, first, randomly assigning all items in the database to a number of groups. The number of desired groups can be predetermined or random. For each initial group, calculate the centroid of the scores for items assigned to that group. This can be done by any method that determines the approximate mean value of the spectrum of scores contained in the item profiles assigned to the initial group, such as eigenanalysis. It is currently preferred is to average all values present in the initial group.

After calculating the group centroids, determine to which group centroid each item is closest, and move it to that group. Whenever an item is moved in this manner, recalculate the centroids for the affected groups. Iterate until the distance between all group centroids and items assigned to each group are below a predetermined threshold or until a certain number of iterations have been accomplished.

A method using grouping to improve performance calculates similarity factors for a user with respect to other users in a particular group (step 106). For example, a user may have one similarity factor with respect to a second user for the "pop" grouping of music items and a second similarity factor with respect to that same user for the "opera" grouping of music items. This is because the "pop" similarity factor is calculated using only ratings for "pop" items, while the "opera" similarity factor is calculated only for "opera" items. Any of the methods described above for calculating similarity factors may be used.

The neighboring users are selected based on the similarity factors (step 108). The neighboring users are weighted, and recommendations for items are arrived at (steps 110 and 112) as above. A weighted average of the ratings given to other items in the group can be used to recommend items both inside the group and outside the group. For example, if a user has a high correlation with another user in the "pop" grouping of music items (the similarity factor between the users is close to 0), that similarity factor can be used to recommend music items inside the "pop" grouping, since both users have rated many items in the group. The similarity factor can also be used to recommend a music item outside of the group, if one of the users has rated an item in another group. Alternatively, a user may select a group, and a recommendation list will be generated based on the predicted rating for the user's neighboring users in that group.

Whether or not grouping is used, a user or set or users may be recommended to a user as similar in taste. In this case, the similarity factors calculated from the user profiles and item profiles are used to match similar users and introduce them to each other. This is done by recommending one user to another in much the same way that an item is recommended to a user. It is possible to increase the recommendation certainty by including the number of items rated by both users in addition to the similarity factors calculated for the users.

Grouping is a special case of "feature-guided automated collaborative filtering" when there is only one feature of interest. In the example above, the feature of interest was genre of music. The method of the present invention works equally well for item domains in which the items have multiple features of interest.

The method using feature-guided automated collaborative filtering incorporates feature values associated with items in the domain. The term "feature value" is used to describe any information stored about a particular feature of the item. For example, a feature value may have boolean feature values indicating whether or not a particular feature exists or does not exist in a particular item.

Alternatively, features may have numerous values, such as terms appearing as "keywords" in a document. In some embodiments, each feature value can be represented by a vector in some metric space, where each term of the vector corresponds to the mean score given by a user to items having the feature value.

Ideally, it is desirable to calculate a vector of distances between every pair of users, one for each possible feature value defined for an item. This may not be possible if the number of possible feature values is very large, i.e., keywords in a document, or the distribution of feature values is extremely sparse. Thus, in many applications, it is desirable to cluster feature values. The terms "cluster" and "feature value cluster" are used to indicate both individual feature values as well as feature value clusters, even though feature values may not necessarily be clustered.

Feature value clusters are created by defining a distance function $\Delta$, defined for any two points in the vector space, as well as vector combination function $\Omega$, which combines any two vectors in the space to produce a third point in the space that in some way represents the average of the points. Although not limited to the examples presented, three possible formulations of $\Delta$ and $\Omega$ are presented below.

The notion of similarity between any two feature values is how similarly they have been rated by the same user, across the whole spectrum of users and items. One method of defining the similarity between any two feature values is to take a simple average. Thus, we define the value $\vec{v}_I^{\alpha x}$ to be the mean of the rating given to each item containing feature value $FV_x^{\alpha}$ that user i has rated. Expressed mathematically:

$$\bar{v}_I^{ax} = \begin{cases} \dfrac{\sum_{p=1}^{|Items|}\left(R_{I,p} \times c_{I,p} \times \Gamma_p^{\alpha x}\right)}{\sum_{p=1}^{|Items|}\left(c_{I,p} \times \Gamma_p^{\alpha x}\right)} & iff\left(\sum_{p=1}^{|Items|} c_{I,p} \times \Gamma_p^{\alpha x}\right) \geq 1 \\ Undefined & otherwise \end{cases}$$

Where $\Gamma_p^{\alpha x}$ indicates the presence or absence of feature value $FV_x^{\alpha}$ in item p. Any distance metric may be used to determine the per-user dimension squared distance between vectors feature value $\alpha_x$ and feature value $\alpha_y$ for user i. For example, any of the methods referred to above for calculating user similarity may be used.

Defining $\delta$ as the per-user dimension squared distance between two feature values, the total distance between the two feature value vectors is expressed mathematically as:

$$\Delta(\vec{FV}_x^{\alpha}, \vec{FV}_y^{\alpha}) = \sqrt{\left(\frac{\|Users\|}{\sum_{I=1}^{\|Users\|} \eta_I^{\alpha x} x \eta_I^{\alpha y}}\right) \times \left(\sum_{I=1}^{\|Users\|} \delta_I^{\alpha xy}\right)}$$

where, the term

$$\frac{\|Users\|}{\sum_{I=1}^{\|Users\|} \eta_I^{\alpha x} x \eta_I^{\alpha y}}$$

represents adjustment for missing data.

The combination function for the two vectors, which represents a kind of average for the two vectors, is expressed mathematically by the following three equations.

$$\Omega\left(\vec{FV}_x^{\alpha}, \vec{FV}_y^{\alpha}\right) = \begin{cases} \dfrac{\vec{v}_I^{\alpha x} + \vec{v}_I^{\alpha y}}{2} & if\ \eta_I^{\alpha x} = 1\ \text{ and }\ \eta_I^{\alpha y} = 1 \\ \vec{v}_I^{\alpha x} & if\ \eta_I^{\alpha x} = 1\ \text{ and }\ \eta_I^{\alpha y} = 0 \\ \vec{v}_I^{\alpha y} & if\ \eta_I^{\alpha x} = 0\ \text{ and }\ \eta_I^{\alpha y} = 1 \end{cases}$$

wherein $\eta_I^{\alpha x}$ indicates whether $\vec{v}_I^{\alpha x}$ is defined.

Another method for calculating the similarity between any two feature values is to assume the number of values used to compute $\vec{v}_I^{\alpha x}$ is sufficiently large. If this assumption is made, the Central Limit Theorem can be used to justify approximating the distribution of vectors by a Gaussian distribution.

Since the Gaussian distribution can be effectively characterized by its mean, variance and sample size, each entry $\vec{v}_I^{\alpha x}$ is now a triplet.

$$\vec{v}_I^{\alpha x} = \left\langle \mu_I^{\alpha_x}, \sigma_I^{2\alpha_x}, N_I^{\alpha_x} \right\rangle$$

where

$$\mu_I^{\alpha_x} = \frac{\sum_{p=1}^{|Items|} \left( R_{I,p} \times c_{I,p} \times \Gamma_p^{\alpha_x} \right)}{\sum_{p=1}^{|Items|} c_{I,p} \times \Gamma_p^{\alpha_x}}$$

is the sample mean of the population,

$$\sigma_I^{2\alpha_x} = \frac{\sum_{p=1}^{|Items|} \left( \left( R_{I,p} - \mu_I^{\alpha_x} \right)^2 \times c_{I,p} \times \Gamma_p^{\alpha_x} \right)}{\sum_{p=1}^{|Items|} \left( c_{I,p} \times \Gamma_p^{\alpha_x} \right)}$$

is the variance of the sampling distribution, and

$$N_I^{\alpha_x} = \sum_{p=1}^{|Items|} \left( c_{I,p} \times \Gamma_p^{\alpha_x} \right)$$

is the sample size.

The total distance between the two feature value vectors is expressed mathematically by:

$$\Delta\left( FV_x^{\alpha}, F\vec{V}_y^{\alpha} \right) = \sqrt{\left( \frac{\|Users\|}{\sum_{I=1}^{|Users|} \eta_I^{\alpha_x} \times \eta_I^{\alpha_x}} \right) \times \left( \sum_{I=1}^{|Users|} \delta_I^{\alpha_{x,y}} \right)}$$

The feature value combination function combines the corresponding triplets from the two vectors by treating them as gaussians, and therefore is represented mathematically by:

$$\Omega\left( F\vec{V}_x^{\alpha}, F\vec{V}_y^{\alpha} \right) = \begin{cases} <\mu_I^{\alpha_{x,y}}, \sigma_I^{2\alpha_{x,y}}, N_I^{\alpha_{x,y}}> & \text{if } \eta_I^{\alpha_x} = 1 \text{ and } \eta_I^{\alpha_y} = 1 \\ <\mu_I^{\alpha_x}, \sigma_I^{2\alpha_x}, N_I^{\alpha_x}> & \text{if } \eta_I^{\alpha_x} = 1 \text{ and } \eta_I^{\alpha_y} = 0 \\ <\mu_I^{\alpha_y}, \sigma_I^{2\alpha_y}, N_I^{\alpha_y}> & \text{if } \eta_I^{\alpha_x} = 0 \text{ and } \eta_I^{\alpha_y} = 1 \end{cases}$$

where

$$\mu_I^{\alpha_{x,y'}} = \frac{\left(N_I^{\alpha} \times \mu_I^{\alpha_x}\right) + \left(N_I^{\alpha_y} \times \mu_I^{\alpha_{yx}}\right)}{\left(N_I^{\alpha_x} + N_I^{\alpha_y}\right)}$$

represents the mean of the new population,

$$\sigma_I^{2^{\alpha_{x,y'}}} = \left(\frac{\left(N_I^{\alpha_x} \times \sigma_I^{2^{\alpha_x}}\right) + \left(N_I^{\alpha_y} \times \sigma_I^{2^{\alpha_y}}\right)}{\left(N_I^{\alpha_x} + N_I^{\alpha_y}\right)}\right) + \left(\frac{N_I^{\alpha_x} + N_I^{\alpha_y}\right) \times \left(\mu_I^{\alpha_x} - \mu_I^{\alpha_y}\right)^2}{\left(N_I^{\alpha_x} + N_I^{\alpha_y}\right)^2}\right)$$

represents the variance of the combined population, and

$$N_I^{\alpha_{x,y'}} = \left(N_I^{\alpha_x} + N_I^{\alpha_y}\right)$$

represents the sample size of the combined population.

The third method of calculating feature value similarity metrics attempts to take into account the variance of the sampling distribution when the sample size of the population is small. A more accurate estimator of the population variance is given by the term

$$S_I^{2^{\alpha_x}} = \frac{\sum_{p=1}^{|Items|}\left(\left(R_{I,p} - \mu_I^{\alpha_x}\right)^2 \times C_{I,p} \times \Gamma_p^{\alpha_x}\right)}{\left(\sum_{p=1}^{|Items|}\left(c_{I,p} \times \Gamma_p^{\alpha_x}\right)\right) - 1}$$

and represents the sample variance, which is an accurate estimator of the underlying population variance. Accordingly operator $\eta_I^{\alpha_x}$ is redefined as:

$$\eta_I^{\alpha_x} = \begin{cases} 1 & \text{if } \left(\sum_{p=1}^{|Items|} c_{I,p}/\Gamma_p^{\alpha_x}\right) > 1 \\ 0 & \text{Otherwise} \end{cases}$$

and the triplet is defined as:

$$\vec{v}_I^{\alpha_x} = <\mu_I^{\alpha_x}, S_I^{2^{\alpha_x}}, N_I^{\alpha_x}>$$

Given the above, the sample variance is represented as:

$$S_I^{2^{\alpha_x}} = \frac{\sum_{p=1}^{|Items|}\left(\left(R_{I,p} - \mu_I^{\alpha_x}\right)^2 \times c_{I,p} \times \Gamma_p^{\alpha_x}\right)}{N_I^{\alpha_x} - 1}$$

The sample variance and the variance of the sample distribution for a finite population are related by the following relationship:

$$\sigma^2 = \left(\frac{N-1}{N}\right) \times S^2$$

which transforms the standard deviation into:

$$\sigma^{2\,\alpha_{x,y}}_I = \left(\frac{N_I^{\alpha_x} - 1}{\left(N_I^{\alpha_x}\right)^2}\right) \times S^{2\,\alpha_x}_I + \left(\frac{N_I^{\alpha_y} - 1}{\left(N_I^{\alpha_y}\right)^2}\right) \times S^{2\,\alpha_x}_I$$

Thus, the feature value vector combination function is defined as:

$$\Omega\left(F\vec{V}_x^\alpha, F\vec{V}_y^\alpha\right) = \begin{cases} <\mu_I^{\alpha_{x,y}}, S^{2\,\alpha_{x,y}}_I, N_I^{\alpha_{x,y}}> & \text{if } \eta_I^{\alpha_x} = 1 \text{ and } \eta_I^{\alpha_y} = 1 \\ <\mu_I^{\alpha_x}, S^{2\,\alpha_x}_I, N_I^{\alpha_x}> & \text{if } \eta_I^{\alpha_x} = 1 \text{ and } \eta_I^{\alpha_y} = 0 \\ <\mu_I^{\alpha_y}, S^{2\,\alpha_{\backslash y}}_I, N_I^{\alpha_y}> & \text{if } \eta_I^{\alpha_x} = 0 \text{ and } \eta_I^{\alpha_y} = 1 \end{cases}$$

Regardless of the feature value combination function used, the item similarity metrics generated by them are used to generate feature value clusters. Feature value clusters are generated from the item similarity metrics using any clustering algorithm known in the art. For example, the method described above with respect to grouping items could be used to group values within each feature.

Feature values can be clustered both periodically and incrementally. Incremental clustering is necessary when the number of feature values for items is so large that reclustering of all feature values cannot be done conveniently. However, incremental clustering may be used for any set of items, and it is preferred to use both periodic reclustering and incremental reclustering.

All feature values are periodically reclustered using any clustering method known in the art, such as eigenanalysis. It is preferred that this is done infrequently, because of the time that may be required to complete such a reclustering. In order to cluster new feature values present in items new to the domain, feature values are incrementally clustered. New feature values present in the new items are clustered into the already existing feature value clusters. These feature values may or may not be reclustered into another feature value cluster when the next complete reclustering is done.

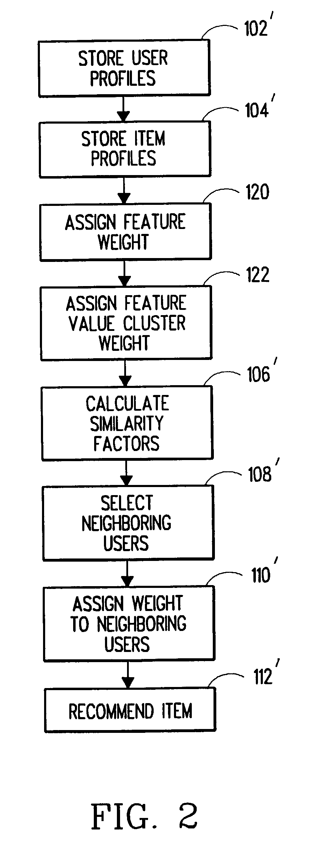

Using the feature value clusters generated by any one of the methods described above, a method for recommending an item, as shown in FIG. 2, uses feature clusters to aid in predicting ratings and proceeds as the method of FIG. 1, in that a plurality of user profiles is stored (step 102') and a plurality of item profiles are stored (step 104'). The method using feature value clusters assigns a weight to each feature value cluster and a weight to each feature based on the users rating of the item (steps 120 and 122).

A feature value cluster weight for each cluster is calculated for each user based on the user's ratings of items containing that cluster. The cluster weight is an indication of how important a particular user seems to find a particular feature value cluster. For example, a feature for an item in a music domain might be the identity of the producer. If a user rated highly all items having a particular producer (or cluster of producers), then the user appears to place great emphasis on that particular producer (feature value) or cluster of producers (feature value cluster).

Any method of assigning feature value cluster weight that takes into account the user's rating of the item and the existence of the feature value cluster for that item is sufficient, however, it is currently preferred to assign feature value cluster weights by summing all of the item ratings that a user has entered and dividing by the number of feature value clusters. Expressed mathematically, the vector weight for cluster x of feature $\alpha$ for user I is:

$$C\vec{W}_I^{\alpha_x} = \begin{cases} \dfrac{\sum_{p=1}^{|Items|} R_{I,p} \times c_{I,p} \times \gamma_p^{\alpha_x}}{\sum_{p=1}^{|Items|} c_{I,p} \times \gamma_p^{\alpha_x}} & iff \; \sum_{p=1}^{|Items|} c_{I,p} \times \gamma_p^{\alpha_x} \geq 1 \\ \\ 0.0 & otherwise \end{cases}$$

where $\gamma_p^{\alpha_x}$ is a boolean operator indicating whether item p contains the feature value cluster x of feature $\alpha$.

The feature value cluster weight is used, in turn, to define a feature weight. The feature weight reflects the importance of that feature relative to the other features for a particular feature. Any method of estimating a feature weight can be used; for example, feature weights may be defined as the reciprocal of the number of features defined for all items. It is preferred that feature weights are defined as the standard deviation of all cluster weight divided by the means of all cluster weights. Expressed mathematically:

$$F\vec{W}_I^{\alpha} = \frac{\text{StandardDev}\left(C\vec{W}_I^{\alpha}\right)}{\text{Mean}\left(C\vec{W}_I^{\alpha}\right)}$$

The feature value cluster weights and the feature weights are used to calculate the similarity factor between two users. The similarity factor between two users may be calculated by any method that takes into account the assigned weights. For example, any of the methods for calculating the similarity between two users, as described above, may be used provided they are augmented by the feature weights and feature value weights. Thus

$$D_{I,J} = \sum_{\alpha=1}^{|FeaturesDefined|} F\vec{W}_I^{\alpha} \times \left( \sum_{a_x=1}^{|\alpha|} \vec{D}_{I,J}^{\alpha_x} \times C\vec{W}_I^{\alpha_x} \times \tau^{\alpha_x}\left(\vec{D}_{I,J}\right) \right)$$

represents the similarity between users I and J, where

$$\tau^{\alpha x}\left(\vec{D}_{I,J}\right)$$

is a boolean operator on a vector of values indicating whether feature value cluster of x for feature $\alpha$ of the vector is defined and where

$$\vec{D}_{I,J} = C\vec{W}_I^{\alpha_x} = \begin{cases} \dfrac{\sum_{p=1}^{|Items|} \left(R_{I,p} - R_{J,p}\right)^2 \times c_{I,p} \times c_{J,p} \times \gamma_p^{\alpha_x}}{\sum_{p=1}^{|Items|} c_{I,p} \times \gamma_p^{\alpha_x}} & iff \; \sum_{p=1}^{|Items|} c_{I,p} \times \gamma_p^{\alpha_x} \geq 1 \\ \\ 0.0 & otherwise \end{cases}$$

The representation of an item as a set of feature values allows the application of various feature-based similarity metrics between items. Two items may not share any identical feature values but still be considered quite similar to each other if they share some feature value clusters. This allows the recommendation of unrated items to a user based on the unrated items similarity to other items which the user has already rated highly.

The similarity between two items $p_1$ and $p_2$, where $P_1$ and $P_2$ represent the corresponding sets of feature values possessed by these items, can be represented as some function, f, of the following three sets: the number of common feature values shared by the two items; the number of feature values that $p_1$ possesses that $p_2$ does not; and the number of feature values that $p_2$ possesses that $p_1$ does not.

Thus, the similarity between two items, denoted by $S(p_1, p_2)$, is represented as:

$$S(p_1, p_2) = F(P_1 \cap P_2, P_1 - P_2, P_2 - P_1)$$

Each item is treated as a vector of feature value clusters and the item-item similarity metrics are defined as:

$$f\left(P_1 \cap P_2\right) = \sum_{\alpha=1}^{|Features\ Defined|} \mathrm{F\vec{W}}_I^\alpha \times \sum_{\alpha_x=1}^{|\alpha|} \left(\mathrm{C\vec{W}}_I^{\alpha_x} \times \gamma_{p_1}^{\alpha_x} \times \gamma_{p_2}^{\alpha_x}\right)$$

$$f\left(P_1 - P_2\right) = \sum_{\alpha=1}^{|Features\ Defined|} \mathrm{F\vec{W}}_I^\alpha \times \sum_{\alpha_x=1}^{|\alpha|} \left(\mathrm{C\vec{W}}_I^{\alpha_x} \times \gamma_{P_1}^{\alpha_x} \times \left(1 - \gamma_{P_2}^{\alpha_x}\right)\right)$$

$$f\left(P_2 - P_1\right) = \sum_{\alpha=1}^{|Features\ Defined|} \mathrm{F\vec{W}}_I^\alpha \times \sum_{\alpha_x=1}^{|\alpha|} \left(\mathrm{C\vec{W}}_I^{\alpha_x} \times \left(1 - \gamma_{p1}^{\alpha_x}\right) \times \gamma_{p2}^{\alpha_x}\right)$$

This metric is personalized to each user since the feature weights and cluster weights reflect the relative importance of a particular feature value to a user.

Another method of defining item-item similarity metrics attempts to take into account the case where one pair of items has numerous identical feature values, because if two items share a number of identical feature values, they are more similar to each other then two items that do not share feature values. Using this method, $f(P_1 \cap P_2)$ is defined as:

$$f\left(P_1 \cap P_2\right) = \sum_{\alpha=1}^{|Features\ Defined|} \mathrm{F\vec{W}}_I^\alpha \times \left( \sum_{\alpha_x=1}^{|\alpha|} \left(\mathrm{CW}_I^{\alpha_x} \times \gamma_{P_1}^{\alpha_x} \times \gamma_{P_2}^{\alpha_x}\right) + \sum_{i=1}^{|FV^\alpha|} \left(\Gamma_{P_1}^{\alpha_x} \times \Gamma_{P_2}^{\alpha_x}\right) \right)$$

Another method for calculating item-item similarity is to treat each item as a vector of feature value clusters and then compute the weighted dot product of the two vectors. Thus,

$$S(p_1, p_2) = g(P_1 \cap P_2)$$

where

$$g\left(P_1 \cap P_2\right) = \sum_{\alpha=1}^{|Features Defined|} F\vec{W}_I^\alpha \times \sum_{\alpha_x=1}^{|\alpha|} \left(C\vec{W}_I^{\alpha_x} \times \gamma_{p1}^{\alpha_x} \times \gamma_{p2}^{\alpha_x}\right)$$

The methods described above can be provided as software on any suitable medium that is readable by a computing device. The software programs means may be implemented in any suitable language such as, C, C++, PERL, LISP, ADA, assembly language or machine code. The suitable media may be any device capable of storing program means in a computer-readable fashion. such as a floppy disk, a hard disk, an optical disk, a CD-ROM, a magnetic tape, a memory card, or a removable magnetic drive.

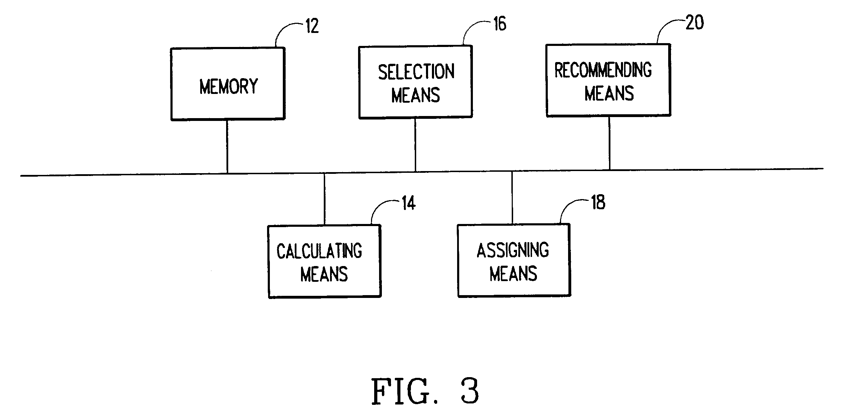

An apparatus may be provided to recommend items to a user. The apparatus, as shown in FIG. 3 has a memory element 12 for storing user and item profiles. Memory element 12 can be any memory element capable of storing the profiles such as, RAM, EPROM, or magnetic media.

A means 14 for calculating is provided which calculates the similarity factors between users. Calculating means 14 may be specialized hardware to do the calculation or, alternatively, calculating means 14 may be a microprocessor or software running on a microprocessor resident in a general-purpose computer.

Means 16 for selecting is also provided to select neighboring users responsive to the similarity factors. Again, specialized hardware or a microprocessor may be provided to implement the selecting means 16, however preferred is to provide a software program running on a microprocessor resident in a general-purpose computer. Selecting means 16 may be a separate microprocessor from calculating means 14 or it may be the same microprocessor.

A means 18 for assigning a weight to each of the neighboring users is provided and can be specialized hardware, a separate microprocessor, the same microprocessor as calculating means 14 and selecting means 16, or a microprocessor resident in a general-purpose computer and running software.

In some embodiments a receiving means is included in the apparatus (not shown in FIG. 3). Receiving means is any device which receives ratings for items from users. The receiving means may be a keyboard or mouse connected to a personal computer. In some embodiments, an electronic mail system operating over a local are network or a wide area network forms the receiving means. In the preferred embodiment, a World Wide Web Page connected to the Internet forms the receiving means.

Also included in the apparatus is means 20 for recommending at least one of the items to the users based on the weights assigned to the users, neighboring users and the ratings given to the item by the users' neighboring users. Recommendation means 20 may be specialized hardware, a microprocessor, or, as above, a microprocessor running software and resident on a general-purpose computer. Recommendation means 20 may also comprise an output device such as a display, audio output, or printed output.

In another embodiment an apparatus for recommending an item is provided that uses feature weights and feature value weights. This apparatus is similar to the one described above except that it also includes a means for assigning a feature value cluster weight 22 and a means for assigning a feature weight 24 (not shown in FIG. 3). Feature value cluster weight assigning means 22 and feature value weight assigning means 24 may be provided as specialized hardware, a separate microprocessor, the same microprocessor as the other means, or as a single microprocessor in a general purpose computer.

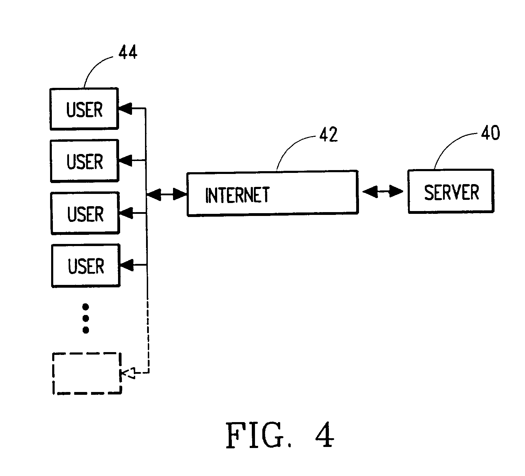

FIG. 4 shows the Internet system on which the preferred method and apparatus may be used. The server 44 is an apparatus as shown in FIG. 3, and it is preferred that server 40 displays a World Wide Web Page when accessed by a user via Internet 42. Server 40 also accepts input over the Internet 42. Multiple users 44 may access server 40 simultaneously.

EXAMPLE

The following example is one way of using the invention, which can be used to recommend items in various domains for many items. By way of example, a new user 44 accesses the system via the World Wide Web. The system displays a welcome page, which allows the user 44 to create an alias to use when accessing the system. Once the user 44 has entered a personal alias, the user 44 is asked to rate a number of items, in this example the items to be rated are recording artists in the music domain.

After the user 44 has submitted ratings for various recording artists, the system allows the user 44 to enter ratings for additional artists or to request recommendations. If the user 44 desires to enter ratings for additional artists, the system can provide a list of artists the user 44 has not yet rated. For the example, the system can simply provide a random listing of artists not yet rated by the user 44. Alternatively, the user 44 can request to rate artists that are similar to recording artists they have already rated, and the system will provide a list of similar artists using the item similarity values previously calculated by the system. The user can also request to rate recording artists from a particular group, e.g. modern jazz, rock, or big band, and the system will provide the user 44 with a list of artists belonging to that group that the user 44 has not yet rated. The user 44 can also request to rate more artists that the user's 44 neighboring users have rated, and the system will provide the user 44 with a list of artists by selecting artists rated by the user's 44 neighboring users.

The user 44 can request the system to make artist recommendations at any time, and the system allows the user 44 to tailor their request based on a number of different factors. Thus, the system can recommend artists from various groups that the user's 44 neighboring users have also rated highly. Similarly, the system can recommend a predetermined number of artists from a particular group that the user will enjoy, e.g. opera singers. Alternatively, the system may combine these approaches and recommend only opera singers that the user's neighboring users have rated highly.

The system allows the user 44 to switch between rating items and receiving recommendations many times. The system also provides a messaging function, so that users 44 may leave messages for other users that are not currently using the system. The system provides "chat rooms," which allow users 44 to engage in conversation with other users 44' that are currently accessing the system. These features are provided to allow users 44 to communicate with one another. The system facilitates user communication by informing a user 44 that another user 44' shares an interest in a particular recording artist. Also, the system may inform a user 44 that another user 44 that shares an interest in a particular recording artists is currently accessing the system, the system will not only inform the user 44, but will encourage the user 44 to contact the other user 44' that shares the interest. The user 44 may leave the system by leaving the Web Page.

Having described preferred embodiments of the invention, it will now become apparent to one of skill in the art that other embodiments incorporating the concepts may be used. It is felt, therefore, that these embodiments should not be limited to disclosed embodiments but rather should be limited only by scope of the following claims.

## Claims

1. A method for recommending an item to one of a plurality of users, the item not yet rated by the user, the method comprising the steps of:

   (a) storing a user profile in a memory for each of a plurality of users, wherein the user profile includes a plurality of values, each of at least some of the plurality of values representing a rating given to one of a plurality of items by the user;
   (b) storing an item profile in a memory for each of the plurality of items, each of the plurality of items belonging to one of a plurality of groups, wherein the item profile includes a plurality of values, each of at least some of the plurality of values representing a rating given to the item by one of the plurality of users;
   (c) calculating, for each of the plurality of users, a plurality of similarity factors, each of the plurality of similarity factors representing the similarity between each user and another of the plurality of users based on item ratings for a particular group;
   (d) selecting, for each of the plurality of users, a plurality of neighboring users with respect to each group, the selection responsive to the similarity factors;
   (e) assigning a weight to each of the neighboring users; and
   (f) recommending an item to one of the plurality of users based on the weights assigned to the user's neighboring users and the ratings given to the unrated item by the user's neighboring users.

2. The method of claim 1 wherein step (c) further comprises:

   (c-a) retrieving the item profile for one of the plurality of items that has been rated by one of the plurality of users;
   (c-b) determining, from the item's profile, other users that have also rated the item;
   (c-c) calculating a similarity factor between the one user and each of the plurality of other users that have also rated the item;
   (c-d) repeating steps (c-a) through (c-c) until all items rated by the one user for the one group have been retrieved; and
   (c-e) repeating steps (c-a) though (c-d) until similarity factors for each user have been calculated.

3. The method of claim 2 wherein step (c-c) further comprises calculating a similarity factor between the one user and each of the plurality of other users that have also rated the item, said similarity factor based only on ratings for other items belonging to the same group.

4. The method of any preceding claim wherein step (d) comprises selecting, for each of the plurality of users, a plurality of neighboring users in each group, each selected neighboring user having a similarity factor less than a predetermined threshold value.

5. The method of claim 4 wherein step (e) further comprises:
   subtracting, for each neighboring user, the similarity factor for that neighboring user from a predetermined threshold value and dividing each difference by the predetermined threshold value.

6. The method of any preceding claim wherein step (f) comprises:

   predicting a rating for each item in one of the plurality of groups not yet rated by one of the plurality of users by taking a weighted average of the ratings given to the items in the group by the one user's neighboring users;

and
recommending a predetermined number of items from the group based on the predicted ratings for those items.

7. The method of any of claims 1 to 5 wherein step (f) comprises:

receiving an item selection from one of the plurality of users; and
predicting a rating for the selected item by taking a weighted average of the ratings given to the selected item by the one user's neighboring users for the group.

8. The method of any of claims 1 to 5 wherein step (f) comprises:

receiving a group selection from one of the plurality of users;
predicting a rating for items in the selected group by taking a weighted average of the ratings given to the items in the group by the one user's neighboring users for that group; and
recommending a predetermined number of items in the group based on the predicted ratings for those items.

9. The method of any preceding claim further comprising the step of:
(g) displaying information about recommended items on a display.

10. The method of any preceding claim wherein an item belongs to multiple groups.

11. A method for recommending, to one of a plurality of users, other users, the method comprising the steps of:

(a) storing a user profile in a memory for each of a plurality of users, wherein the user profile includes a plurality of values, each of at least some of the plurality of values representing a rating given to one of a plurality of items by the user;
(b) storing an item profile in a memory for each of the plurality of items, each of the plurality of items belonging to one of a plurality of groups, wherein the item profile includes a plurality of values, each of at least some of the plurality of values representing a rating given to the item by one of the plurality of users;
(c) calculating, for each of the plurality of users, a plurality of similarity factors, each of the plurality of similarity factors representing the similarity between each user and another one of the plurality of users based on the item ratings for a particular group;
(d) recommending at least one of the neighboring users to one of the plurality of users based on the similarity factors.

12. The method of claim 11 wherein step (d) further comprises recommending at least one of the neighboring users to one of the plurality of users based on the similarity factors and the number of items rated by both the one user and the at least one neighboring user.

13. A method for predicting a rating for an item, the item having at least one feature defining a characteristic of the item and having a plurality of possible values that may be grouped into clusters of feature values, the method comprising the steps of:

(a) storing a user profile in a memory for each of a plurality of users, wherein the user profile includes a plurality of values, each of at least some of the plurality of values representing a rating given to one of a plurality of items by the user;
(b) storing an item profile in a memory for each of the plurality of items, wherein the item profile includes a plurality of values, each of at least some of the plurality of values representing a rating given to the item by one of the plurality of users;
(c) assigning, for each user, a weight to each value cluster within each feature;
(d) assigning, for each user, a weight to each feature;
(e) calculating, for each of the plurality of users, a plurality of similarity factors, each of the plurality of similarity factors based on the feature weights, the cluster weights, and the ratings given to items by the respective users;
(f) selecting, for each of the plurality of users, a plurality of neighboring users responsive to the similarity factors;
(g) assigning a weight to each of the neighboring users; and
(h) recommending an item to one of the plurality of users based on the weights assigned to the user's neighboring users and the ratings given to the unrated item by the user's neighboring users.

**14.** The method of claim 13 wherein step (c) further comprises:

assigning, for each user, a weight to each value cluster within each feature based on the rating given to the item by the user and the number of feature value clusters present.

**15.** The method of claim 13 or 14 wherein step (d) further comprises:

assigning, for each user, a weight to each feature based on the number of features defined for the item.

**16.** The method of claim 13 or 14 wherein step (d) further comprises:

assigning, for each user, a weight to each feature based on the weights assigned to each feature value cluster.

**17.** The method of claim 16, wherein the feature weight is assigned by dividing the standard deviation of the cluster weights by the mean of the cluster weights.

**18.** The method of any of claims 13 to 17, wherein step (c) further comprises the steps of:

(c-a) calculating, for each feature value, a similarity factor to all other feature values in a feature; and
(c-b) grouping the feature values into clusters based on the similarity factors.

**19.** A method for recommending an item to one of a plurality of users, the item having at least one feature defining a characteristic of the item and having a plurality of possible values that may be grouped into clusters of feature values, the method comprising the steps of:

(a) storing a user profile in a memory for each of a plurality of users, wherein the user profile includes a plurality of values, each of at least some of the plurality of values representing a rating given to one of a plurality of items by the user;
(b) storing an item profile in a memory for each of the plurality of items, wherein the item profile includes a plurality of values, each of at least some of the plurality of values representing a rating given to the item by one of the plurality of users;
(c) assigning, for at least one user, a weight to each value cluster within each feature;
(d) assigning, for the at least one user, a weight to each feature;
(e) calculating, for each of the plurality of items, a plurality of similarity factors, each of the plurality of similarity factors based on the feature weights and the cluster weights;
(f) selecting an item for which a favourable rating has been received from the at least one user;
(g) selecting a plurality of items responsive to the selected item and the similarity factors;
(h) recommending at least one of the selected items to the at least one user.

**20.** An article of manufacture having program means embodied therein, the program means for predicting a rating for an item, the item having at least one feature defining a characteristic of the item and having a plurality of possible values that may be grouped into clusters of feature values, the article of manufacture comprising:

computer-readable program means for storing a user profile in a memory for each of a plurality of users, wherein the user profile includes a plurality of values, each of at least some of the plurality of values representing a rating given to one of a plurality of items by the user;
computer-readable program means for storing an item profile in a memory for each of the plurality of items, wherein the item profile includes a plurality of values, each of at least some of the plurality of values representing a rating given to the item by one of the plurality of users;
computer-readable program means for assigning, for each user, a weight to each value cluster within each feature;
computer-readable program means for assigning, for each user, a weight to each feature;
computer-readable program means for calculating, for each of the plurality of users, a plurality of similarity factors, each of the plurality of similarity factors based on the feature weights, the cluster weights, and the ratings given to items by the respective users;
computer-readable program means for selecting, for each of the plurality of users, a plurality of neighboring users responsive to the similarity factors;
computer-readable program means for assigning a weight to each of the neighboring users; and
computer-readable program means for recommending an item to one of the plurality of users based on the weights assigned to the user's neighboring users and the ratings given to the unrated item by the user's neighboring users.

**21.** An apparatus for recommending an item, the item having at least one feature defining a characteristic of the item and having a plurality of possible values that may be grouped into clusters of feature values, comprising:

a memory element for storing user profiles, wherein each user profile includes a plurality of values, each of at least some of the plurality of values representing a rating given to one of a plurality of items by the user;

a memory element for storing item profiles, wherein each item profile includes a plurality of values, each of at least some of the plurality of values representing a rating given to the item by one of the plurality of users;

means for assigning, for each user, a weight to each value cluster within each feature;

means for assigning, for each user, a weight to each feature;

means for calculating, for each of the plurality of users, a plurality of similarity factors, each of the plurality of similarity factors based on the feature weights, the cluster weights, and the ratings given to items by the respective users;

means for selecting, for each of the plurality of users, a plurality of neighboring users responsive to the similarity factors;

means for assigning a weight to each of the neighboring users; and

means for recommending an item to one of the plurality of users based on the weights assigned to the user's neighboring users and the ratings given to the unrated item by the user's neighboring users.

FIG. 1

FIG. 2

FIG. 3

FIG. 4

EP 0 751 471 A1

**European Patent Office**

**EUROPEAN SEARCH REPORT**

Application Number

EP 96 30 4536

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | TRANSCENDING BOUNDARIES, CSCW `94. PROCEEDINGS OF THE CONFERENCE ON COMPUTER SUPPORTED COOPERATIVE WORK, WORKSHOPS OF THE CONFERENCE ON COMPUTER SUPPORTED COLLABORATIVE WORK, CHAPEL HILL, NC, USA, 22-23 OCT. 1994, ISBN 0-89791-689-1, 1994, NEW YORK, NY, USA, ACM, USA, pages 175-186, XP000601284 RESNICK P ET AL: "GroupLens: an open architecture for collaborative filtering of netnews" * page 177, column 1, line 48 - page 183, column 2, line 24 * --- | 1,11,13, 19-21 | G06F17/60 |
| A | COMMUNICATIONS OF THE ACM, DEC. 1992, USA, vol. 35, no. 12, ISSN 0001-0782, pages 61-70, XP000334368 GOLDBERG D ET AL: "Using collaborative filtering to weave an information tapestry" * page 63, column 1, line 49 - page 64, column 3, line 37 * ----- | 1,11,13, 19-21 | |

**TECHNICAL FIELDS SEARCHED** (Int.Cl.6)

G06F

The present search report has been drawn up for all claims

| Place of search | Date of completion of the search | Examiner |
|---|---|---|
| THE HAGUE | 26 September 1996 | Suendermann, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)